# EUROPEAN PATENT SPECIFICATION

(11) **EP 2 752 456 B1**
(45) Date of publication and mention of the grant of the patent: **27.06.2018**
(21) Application number: 12827267.1
(22) Date of filing: 27.08.2012
(51) Int. Cl.: C08L 67/02, C08G 63/672, C08K 5/523

(54) **POLYESTER RESIN COMPOSITION AND METHOD FOR PRODUCING SAME**
POLYESTERHARZZUSAMMENSETZUNG UND VERFAHREN ZU IHRER HERSTELLUNG
COMPOSITION DE RÉSINE POLYESTER ET SON PROCÉDÉ DE PRODUCTION

(30) Priority: 30.08.2011 JP 2011187016
(43) Date of publication of application: 09.07.2014
(73) Proprietor: Mitsubishi Gas Chemical Company, Inc., Tokyo 100-8324 (JP)
(72) Inventor: IWASAKI, Atsuko, Hiratsuka-shi Kanagawa 254-0016 (JP); SATO, Kazunobu, Hiratsuka-shi Kanagawa 254-0016 (JP)
(74) Representative: Vossius & Partner Patentanwälte Rechtsanwälte mbB
(86) International application number: PCT/JP2012/071597
(87) International publication number: WO 2013/031730

(56) References cited:
- EP-A1- 1 535 945
- WO-A1-2006/126506
- JP-A- H04 201 431
- JP-A- H08 134 260
- JP-A- 2000 344 939
- JP-A- 2004 091 693
- JP-A- 2009 155 412
- JP-A- 2010 006 965
- JP-A- 2010 006 965
- JP-A- 2013 121 991

## Description

### Technical Field

The present invention relates to a polyester resin composition comprising a diol unit having a cyclic acetal skeleton, and specifically relates to a polyester resin composition comprising a specific polyester resin and a specific phosphorus compound and a method for producing the same, and also to a polyester resin composition comprising a specific polyester resin, a specific phosphorus compound and a specific basic compound, and a method for producing the same.

### Background Art

A polyester-based resin, in particular, polyethylene terephthalate (hereinafter, sometimes referred to as "PET") is a resin well balanced between the properties such as mechanical performance, solvent resistance, aroma retaining property and recyclability, and has been used in a large amount, mainly for the application to produce the products such as bottles, sheets and films. However, PET is high in crystallinity, and hence when a thick molded article or sheet is tried to be formed, whitening occurs due to crystallization to impair the transparency. In addition, the glass transition temperature of PET is approximately 80°C, and hence it has been impossible to use PET for the applications requiring high heat resistance and transparency such as products used in vehicles, packaging materials for import and export, and packaging materials for retorting or heating with microwave oven.

On the other hand, polyethylene naphthalate (hereinafter, sometimes referred to as "PEN"), which is a transparent polyester resin quite similar to PET in chemical structure, is a polyester having a naphthalene dicarboxylic acid unit in place of the dicarboxylic acid unit of PET, allows processing of substantially the same molded articles (such as bottles) as those of PET and further has a possibility of recycling these molded articles. PEN has a rigid molecular structure so that PEN can provide merits superior to PET with respect to the properties such as the heat resistance (glass transition temperature is about 110°C) and the gas barrier property, but is very expensive and has a high crystallinity like PET; hence, PEN has a drawback such that when a thick molded article or sheet is tried to be produced, whitening occurs due to crystallization to impair the transparency.

Accordingly, for applications needing transparency, there have been used low-crystallinity polyester resins such as a modified PET partially copolymerized with 1,4-cyclohexane dimethanol and a modified PET partially modified with isophthalic acid. However, the glass transition temperatures of these resins are approximately 80°C, and in the present state of affairs, these resins remain unimproved in heat resistance as compared to PET.

On the other hand, a polyester resin (for example, Patent Literature 1) comprising a diol having a cyclic acetal skeleton is a polyester resin having an improved heat resistance as compared to the heat resistances of PET and PEN, while maintaining high transparency, and can be used in applications requiring transparency and heat resistance. In addition, the foregoing resin is a resin having a suppressed crystallinity, and thus, is free from a trouble such as whitening due to crystallization even when a thick molded article or sheet is produced, and accordingly allows transparent molded articles to be easily produced. However, when the foregoing resin is produced by a common direct esterification method, there is a problem such that the degradation of the molecular weight of the resin, the gelation of the resin and the broadening of the molecular weight distribution of the resin due to the decomposition of the cyclic acetal skeleton tend to occur.

Patent Literature 2 proposes the use of a basic compound at the time of production as a method for suppressing the degree of the thermal decomposition of the polyester resin comprising the diol having a cyclic acetal skeleton and making satisfactory the exterior appearance of molded articles.

Patent Literature 3 also proposes, as a method for providing a polyester resin comprising a diol having a cyclic acetal skeleton and being excellent in mechanical properties such as impact resistance and low in yellowness, a method in which a specific ester and a diol having a cyclic acetal skeleton are subjected to a transesterification reaction in the presence of a titanium compound to produce an oligomer, and then the oligomer is made to produce a compound having a higher molecular weight in the presence of a phosphorus compound such as trimethyl phosphate.

On the other hand, there has also been proposed a formation of a multilayer sheet provided with transparency and heat resistance by using a layer formed of a polyester resin comprising a diol having a cyclic acetal skeleton, and a transparent resin layer formed of a resin such as another polyester resin or an acrylic resin (for example, Patent Literature 4 and Patent Literature 5).

Patent Literature 6 also proposes, as a method for providing a polyester resin composition being excellent in heat resistance and transparency, and being hardly colored at the time of molding, a composition comprising the ingredients such as a polyester resin comprising a diol having a cyclic acetal skeleton and a phosphorus-based antioxidant.

Patent Literature 7 also proposes, as a method for providing a polyester resin composition hardly undergoing thermal deteriorations such as yellow coloration, molecular weight degradation and generation of a gel-like component when heat processed at the time of production or molding, a composition comprising the ingredients such as a polyester resin comprising a diol having a cyclic acetal skeleton and a phosphorus-based antioxidant such as a specific phosphite.

It is known that in general, phosphorus compounds deactivate the polycondensation reaction catalyst of the polyester resin (see, Non Patent Literature 1).

### Citation List

### Patent Literature

Patent Literature 1: Japanese Patent Laid-Open No. 2002-69165
Patent Literature 2: Japanese Patent Laid-Open No. 2005-314643
Patent Literature 3: Japanese Patent Laid-Open No. 2006-225621
Patent Literature 4: Japanese Patent Laid-Open No. 2003-182014
Patent Literature 5: Japanese Patent Laid-Open No. 2008-188875
Patent Literature 6: Japanese Patent Laid-Open No. 2004-67830
Patent Literature 7: Japanese Patent Laid-Open No. 2007-326890

### Non Patent Literature

Non Patent Literature 1: "Handbook of Saturated Polyester Resins," edited by Kazuo Yuki, published by Nikkan Kogyo Shimbun (Business & Technology Daily News), Ltd., December 22, 1989, pp.142 to 145.

### Summary of Invention

### Technical Problem

However, a polyester resin composition obtained by the conventional technique still cannot be said to be sufficient in the thermal stability and the exterior appearance.

In particular, when a resin resides for a long time in an extruder as in molding with a current extruder, there occurs a new problem such that the resin tends to undergo gelation, molecular weight degradation, coloration and burning due to the decomposition of the cyclic acetal skeleton due to excessive heating and the multifunctionalization of the diol having the cyclic acetal skeleton due to excessive heating; thus, the resin is required to have a further thermal stability such that the resin can be used under a harsh condition that molded articles are continuously produced at a high temperature for a long time.

When in a multilayer sheet comprising a layer formed of a polyester resin comprising a diol having a cyclic acetal skeleton and a layer formed of another resin, the viscosities and the melting points of the resins constituting the individual layers are different from each other, the molding temperature is frequently set at a temperature higher than the molding temperature of the polyester resin comprising a diol having a cyclic acetal skeleton, in order to obtain a sheet having a satisfactory exterior appearance; in such a case, the effects provided by the use of a basic compound or a phosphorus compound cannot be said to be sufficient, and there remains a problem such that coloration and a gel-like substance tend to occur.

The present invention takes as its object the provision of a polyester resin composition overcoming the drawbacks of the conventional techniques, being improved in the thermal stability at the time of heat processing at a high temperature for a long time, and being excellent in exterior appearance.

### Solution to Problem

The present inventors made a diligent study in order to solve the foregoing problems, and consequently have reached the present invention by discovering that a polyester resin composition comprising a polyester resin comprising a diol unit having a cyclic acetal skeleton and a specific phosphorus compound in a specific amount (or a specific phosphorus compound and a specific basic compound in specific amounts, respectively) is improved in the thermal stability at the time of mold processing at a high temperature, hardly causes the degradation of the exterior appearance quality and the degradation of the physical properties of the molded articles such as the decomposition of the diol having a cyclic acetal skeleton, the generation of a gel-like substance, the degradation of the molecular weight and the yellow coloration, and in addition, is excellent in transparency.

In addition, the present inventors have reached the present invention by discovering that a polyester resin composition, which is improved in the thermal stability at the time of mold processing at a high temperature, hardly causes the degradation of the exterior appearance quality and the physical properties of the molded articles such as the decomposition of the diol having a cyclic acetal skeleton, the generation of a gel-like substance, the degradation of the molecular weight and the yellow coloration, and in addition, is excellent in transparency, is obtained by mixing a specific phosphorus compound in a specific amount (or a specific phosphorus compound and a specific basic compound in specific amounts, respectively) with the polyester resin, after the completion of the polymerization reaction of the polyester resin comprising the diol unit having a cyclic acetal skeleton.

Specifically, the present invention is as follows.
[1] A polyester resin composition comprising:
   a polyester resin (A) comprising a dicarboxylic acid unit and a diol unit, 1 to 60 mol% of the diol unit being a diol unit having a cyclic acetal skeleton;
   a phosphorus compound (B) represented by the following general formula (1); and
   a basic compound (C),
   wherein, based on 100 parts by weight of the polyester resin (A), the phosphorus compound (B) is in an amount of 0.005 to 2 parts by weight and the basic compound (C) is in an amount of 0 to 2 parts by weight: 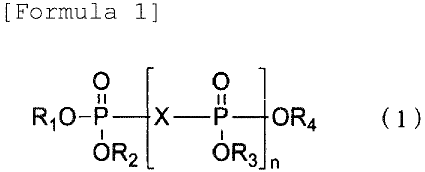 (wherein R₁, R₂, R₃ and R₄ each independently represent an aryl group, X represents a divalent group derived from an aromatic dihydroxy compound having 6 to 15 carbon atoms, and n is an integer of 1 to 5.)
[2] The polyester resin composition according to [1], wherein a content of the basic compound (C) is 0.0005 to 2 parts by weight based on 100 parts by weight of the polyester resin (A).
[3] The polyester resin composition according to [1] or [2], wherein the basic compound (C) is an alkali metal salt and/or an alkali earth metal salt.
[4] The polyester resin composition according to any one of [1] to [3], wherein the diol unit having a cyclic acetal skeleton is the diol unit derived from a diol represented by the general formula (2): 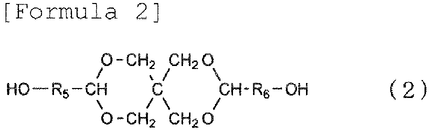 (wherein R₅ and R₆ each independently represent a hydrocarbon group selected from the group consisting of an aliphatic hydrocarbon group having 1 to 10 carbon atoms, an alicyclic hydrocarbon group having 3 to 10 carbon atoms and an aromatic hydrocarbon group having 6 to 10 carbon atoms) or the general formula (3): 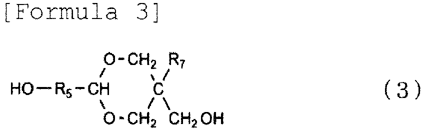 (wherein R₅ is the same as described above, and R₇ represents a hydrocarbon group selected from the group consisting of an aliphatic hydrocarbon group having 1 to 10 carbon atoms, an alicyclic hydrocarbon group having 3 to 10 carbon atoms and an aromatic hydrocarbon group having 6 to 10 carbon atoms.)
[5] The polyester resin composition according to any one of [1] to [3], wherein the diol unit having a cyclic acetal skeleton is a diol unit derived from 3,9-bis(1,1-dimethyl-2-hydroxyethyl)-2,4,8,10-tetraoxaspiro[5.5]undecane or a diol unit derived from 5-methylol-5-ethyl-2-(1,1-dimethyl-2-hydroxyethyl)-1,3-dioxane.
[6] The polyester resin composition according to any one of [1] to [5], wherein, of the diol units, the diol unit other than the diol unit having a cyclic acetal skeleton is the diol unit(s) derived from one or more diols selected from the group consisting of ethylene glycol, diethylene glycol, trimethylene glycol, 1,4-butane diol and 1,4-cyclohexane dimethanol.
[7] The polyester resin composition according to any one of [1] to [6], wherein the dicarboxylic acid unit is the dicarboxylic acid unit(s) derived from one or more dicarboxylic acids selected from the group consisting of terephthalic acid, isophthalic acid, 1,4-naphthalene dicarboxylic acid, 1,5-naphthalene dicarboxylic acid, 2,6-naphthalene dicarboxylic acid and 2,7-naphthalene dicarboxylic acid.
[8] The polyester resin composition according to any one of [1] to [7], wherein a melting point of the phosphorus compound (B) is 50°C or higher and 150°C or lower.
[9] A method for producing a polyester resin composition, comprising:
   mixing a polyester resin (A) comprising a dicarboxylic acid unit and a diol unit, 1 to 60 mol% of the diol unit being a diol unit having a cyclic acetal skeleton, with a phosphorus compound (B) represented by the following general formula (1) and a basic compound (C),
   wherein, based on 100 parts by weight of a polyester resin (A), an amount of the phosphorus compound (B) is 0.005 to 2 parts by weight and an amount of the base compound (C) is 0 to 2 parts by weight: 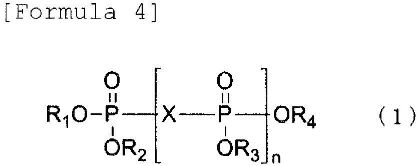 (wherein R₁, R₂, R₃ and R₄ each independently represent an aryl group, X represents a divalent group derived from an aromatic dihydroxy compound having 6 to 15 carbon atoms, and n is an integer of 1 to 5.)
[10] The method for producing the polyester resin composition according to [9], wherein the mixing amount of the basic compound (C) is 0.0005 to 2 parts by weight based on 100 parts by weight of the polyester resin (A).
[11] The method for producing the polyester resin composition according to [9] or [10], wherein the basic compound (C) is an alkali metal salt and/or an alkali earth metal salt.
[12] The method for producing the polyester resin composition according to any one of [9] to [11], wherein the diol unit having a cyclic acetal skeleton is a diol unit derived from a diol represented by the general formula (2): 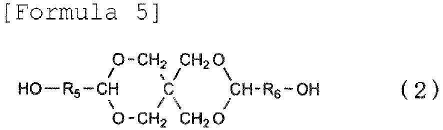 (wherein R₅ and R₆ each independently represent a hydrocarbon group selected from the group consisting of an aliphatic hydrocarbon group having 1 to 10 carbon atoms, an alicyclic hydrocarbon group having 3 to 10 carbon atoms and an aromatic hydrocarbon group having 6 to 10 carbon atoms) or the general formula (3): 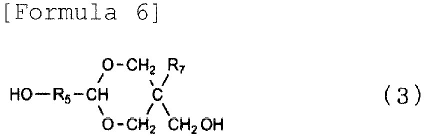 (wherein R₅ is the same as described above, and R₇ represents a hydrocarbon group selected from the group consisting of an aliphatic hydrocarbon group having 1 to 10 carbon atoms, an alicyclic hydrocarbon group having 3 to 10 carbon atoms and an aromatic hydrocarbon group having 6 to 10 carbon atoms.)
[13] The method for producing the polyester resin composition according to any one of [9] to [11], wherein the diol unit having a cyclic acetal skeleton is a diol unit derived from 3,9-bis(1,1-dimethyl-2-hydroxyethyl)-2,4,8,10-tetraoxaspiro[5.5]undecane or a diol unit derived from 5-methylol-5-ethyl-2-(1,1-dimethyl-2-hydroxyethyl)-1,3-dioxane.
[14] The method for producing the polyester resin composition according to any one of [9] to [13], wherein of the diol units, the diol unit other than the diol unit having a cyclic acetal skeleton is the diol unit(s) derived from one or more diols selected from the group consisting of ethylene glycol, diethylene glycol, trimethylene glycol, 1,4-butane diol and 1,4-cyclohexane dimethanol.
[15] The method for producing the polyester resin composition according to any one of [9] to [14], wherein the dicarboxylic acid unit is the dicarboxylic acid unit(s) derived from one or more dicarboxylic acids selected from the group consisting of terephthalic acid, isophthalic acid, 1,4-naphthalene dicarboxylic acid, 1,5-naphthalene dicarboxylic acid, 2,6-naphthalene dicarboxylic acid and 2,7-naphthalene dicarboxylic acid.
[16] The method for producing the polyester resin composition according to any one of [9] to [15], wherein a melting point of the phosphorus compound (B) is 50°C or higher and 150°C or lower.

### Advantageous Effects of Invention

According to the present invention, it is possible to provide a polyester resin composition being improved in the thermal stability at the time of heat processing at a high temperature for a long time, and being excellent in exterior appearance.

### Description of Embodiment

Hereinafter, the embodiment of the present invention is described (hereinafter, referred to as the present embodiment). It is to be noted that the present embodiment is presented as exemplification for describing the present invention, and the present invention is not limited only to the present embodiment.

### [Polyester Resin Composition]

The polyester resin composition of the present embodiment includes 100 parts by weight of a polyester resin (A) comprising: a dicarboxylic acid unit and a diol unit, 1 to 60 mol% of the diol unit being a diol unit having a cyclic acetal skeleton; a phosphorus compound (B) represented by the following general formula (1); and a basic compound (C), wherein, based on 100 parts by weight of a polyester resin (A), the phosphorus compound (B) is in an amount of 0.005 to 2 parts by weight and the basic compound (C)is in an amount of 0 to 2 parts by weight: 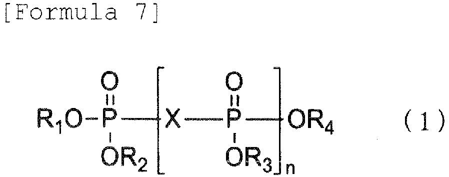 (wherein R₁, R₂, R₃ and R₄ each independently represent an aryl group, X represents a divalent group derived from an aromatic dihydroxy compound having 6 to 15 carbon atoms, and n is an integer of 1 to 5.)

### <Polyester Resin (A)>

The polyester resin (A) used in the present embodiment includes a dicarboxylic acid unit and a diol unit, and 1 to 60 mol% of the diol unit is a diol unit having a cyclic acetal skeleton.

Here, the chemical structure of the polyester resin can be determined by such a ¹H-NMR analysis as described below.

In the present embodiment, the diol unit having a cyclic acetal skeleton is preferably a unit derived from a compound represented by the following general formula (2) or (3) : 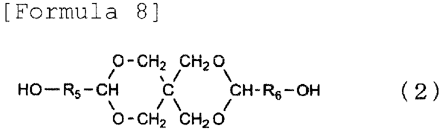 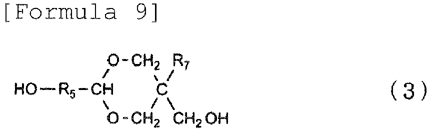 (in formulas (2) and (3), R₅, R₆ and R₇ each independently represent a hydrocarbon group selected from the group consisting of an aliphatic hydrocarbon group having 1 to 10 carbon atoms, an alicyclic hydrocarbon group having 3 to 10 carbon atoms and an aromatic hydrocarbon group having 6 to 10 carbon atoms.)

Among the compounds represented by the general formulas (2) and (3), from the viewpoint of optical properties, heat resistance and mechanical properties, particularly preferable compound is: 3,9-bis(1,1-dimethyl-2-hydroxyethyl)-2,4,8,10-tetraoxaspiro[5.5]undecane or 5-methylol-5-ethyl-2-(1,1-dimethyl-2-hydroxyethyl)-1,3-dioxane.

In the present embodiment, examples of the diol units other than the diol units having a cyclic acetal skeleton may include, without being particularly limited to: aliphatic diols such as ethylene glycol, trimethylene glycol, 1,4-butane diol, 1,5-pentane diol, 1,6-hexane diol, diethylene glycol, propylene glycol and neopentyl glycol; polyether diols such as polyethylene glycol, polypropylene glycol and polybutylene glycol; alicyclic diols such as 1,3-cyclohexane dimethanol, 1,4-cyclohexane dimethanol, 1, 2-decahydronaphthalene dimethanol, 1,3-decahydronaphthalene dimethanol, 1,4-decahydronaphthalene dimethanol, 1,5-decahydronaphthalene dimethanol, 1,6-decahydronaphthalene dimethanol, 2,7-decahydronaphthalene dimethanol, tetralin dimethanol, norbornane dimethanol, tricyclodecane dimethanol and pentacyclododecane dimethanol; bisphenols such as 4,4'-(1-methylethylidene)bisphenol, methylenebisphenol(bisphenol F), 4,4'-cyclohexylidenebisphenol (bisphenol Z) and 4,4'-sulfonylbisphenol (bisphenol S); alkylene oxide adducts of the foregoing bisphenols; aromatic dihydroxy compounds such as hydroquinone, resorcinol, 4,4'-dihydroxybiphenyl, 4,4'-dihydroxydiphenyl ether and 4,4'-dihydroxydiphenylbenzophenone; and diol units derived from the diol compounds such as the alkylene oxide adducts of the foregoing aromatic dihydroxy compounds.

From the viewpoint of the factors such as the mechanical performance and economic efficiency of the polyester resin of the present embodiment, the diol unit other than the diol unit having a cyclic acetal skeleton is preferably ethylene glycol, diethylene glycol, trimethylene glycol, 1,4-butane diol and 1,4-cyclohexane dimethanol, and particularly preferably ethylene glycol.

The foregoing diol units presented as examples can be used each alone or in combinations of two or more thereof.

Examples of the dicarboxylic acid unit of the polyester resin (A) used in the present embodiment may include, without being particularly limited to: dicarboxylic acid units derived from aliphatic dicarboxylic acids such as succinic acid, glutaric acid, adipic acid, pimelic acid, suberic acid, azelaic acid, sebacic acid, dodecane dicarboxylic acid, cyclohexane dicarboxylic acid, decane dicarboxylic acid, norbornane dicarboxylic acid, tricyclodecane dicarboxylic acid and pentacyclododecane dicarboxylic acid; and dicarboxylic acid units derived from aromatic dicarboxylic acids such as terephthalic acid, isophthalic acid, phthalic acid, 2-methylterephthalic acid, 1,4-naphthalene dicarboxylic acid, 1,5-naphthalene dicarboxylic acid, 2,6-naphthalene dicarboxylic acid, 2,7-naphthalene dicarboxylic acid, biphenyldicarboxylic acid and tetralin dicarboxylic acid.

From the viewpoint of the mechanical performances and heat resistance of the polyester resin of the present embodiment, the dicarboxylic acid unit is preferably the dicarboxylic acid units derived from aromatic dicarboxylic acids such as terephthalic acid, isophthalic acid, 1,4-naphthalene dicarboxylic acid, 1,5-naphthalene dicarboxylic acid, 2,6-naphthalene dicarboxylic acid and 2,7-naphthalene dicarboxylic acid, and is particularly preferably dicarboxylic acid units derived from terephthalic acid, 2,6-naphthalene dicarboxylic acid and isophthalic acid. Among these, from the viewpoint of economic efficiency, the dicarboxylic acid unit derived from terephthalic acid is most preferable.

The foregoing dicarboxylic acids presented as examples can be used each alone or in combinations of two or more thereof.

The polyester resin (A) used in the present embodiment includes, in the whole diol units, the diol unit having a cyclic acetal skeleton in a proportion of 1 to 60 mol%, preferably 5 to 50 mol%, and particularly preferably 10 to 45 mol%. When the proportion of the diol unit having a cyclic acetal skeleton falls within the foregoing range, the polyester resin (A) is degraded in crystallinity and increased in glass transition temperature, and hence comes to be a resin having a high transparency and a high heat resistance.

The melt viscosity of the polyester resin (A) used in the present embodiment is not particularly limited, but is preferably in the range from 700 to 5000 Pa·s as measured at a measurement temperature of 240°C and at a shear rate of 100 s⁻¹. When the melt viscosity is in the foregoing range, the polyester resin composition is further excellent in moldability.

The glass transition point of the polyester resin (A) used in the present embodiment is not particularly limited, but from the viewpoint of heat resistance, is preferably 85 to 150°C and more preferably 90 to 130°C. Here, the glass transition point of the polyester resin (A) can be measured, as described below, by differential scanning calorimetry (DSC).

The number average molecular weight (Mn) of the polyester resin (A) used in the present embodiment is not particularly limited, but from the viewpoint of mechanical strength, is preferably 8000 to 30000 and more preferably 10000 to 25000. The molecular weight distribution (Mw/Mn) of the polyester resin (A) used in the present embodiment is not particularly limited, but from the viewpoint of moldability, is preferably 2.5 to 12.0 and more preferably 2.5 to 8.0. Here, the number average molecular weight (Mn) and the molecular weight distribution (Mw/Mn) can be measured, as described below, by gel permeation chromatography (GPC).

The content of the polyester resin (A) in the polyester resin composition of the present embodiment is not particularly limited, but from the viewpoint of heat resistance and molding processability, is preferably 50 parts by weight or more and more preferably 60 parts by weight or more, based on 100 parts by weight of the polyester resin composition.

### <Phosphorus Compound (B)>

The phosphorus compound (B) used in the present embodiment is represented by the following formula (1). These can be used each alone, or two or more thereof can be simultaneously used.

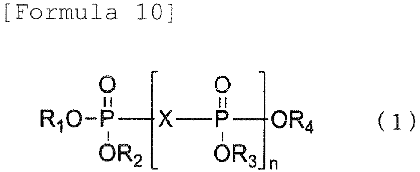

In formula (1), R₁, R₂, R₃ and R₄ each independently represent an aryl group. Examples of the aryl group include, without being particularly limited to: phenyl, cresyl, xylenyl, tolyl, xylyl, cumenyl, mesityl, benzyl, phenetyl, styryl, cinnamyl, benzhydryl, trityl, ethylphenyl, propylphenyl, butylphenyl, pentylphenyl, hexylphenyl, heptylphenyl, octylphenyl, nonylphenyl, decylphenyl, undecylphenyl, dodecylphenyl, phenylphenyl, benzylphenyl, p-cumylphenyl, dinonylphenyl, α-naphthyl and β-naphthyl. Among these, phenyl, cresyl, xylenyl are preferable, and xylenyl is particularly preferable.

In the foregoing formula (1), X represents a divalent group derived from an aromatic dihydroxy compound having 6 to 15 carbon atoms. Examples of the X group include, without being particularly limited to: the groups derived from resorcinol, catechol, hydroquinone, bisphenol A, bisphenol F, bisphenol S and biphenol. From the viewpoint of the thermal stability of the obtained polyester resin composition, among the foregoing groups, X is preferably the groups derived from resorcinol, hydroquinone and bisphenol A, and particularly preferably the group derived from resorcinol. Here, n represents an integer of 1 to 5, and n is preferably 1 to 3 and particularly preferably 1.

Specific examples of the phosphorus compound represented by formula (1) may include: phenylenebis(diphenyl phosphate), phenylenebis(phenyl cresyl phosphate), 1,3-phenylenebis(dixylenyl phosphate), phenylenebis(dicresyl phosphate), bisphenol A bis(diphenyl phosphate) and bisphenol A bis(dicresyl phosphate). Because of being excellent in thermal stability and hydrolysis resistance, having low volatility, hardly impairing the transparency of the resin, being powder and easy to handle and being particularly capable of improving heat resistance, 1,3-phenylenebis(dixylenyl phosphate) is particularly preferable.

In the present embodiment, from the viewpoint of the handling at the time of molding processing, the melting point of the phosphorus compound (B) is preferably 50 to 150°C and more preferably 70 to 120°C. Here, the melting point is measured with a melting point measurement apparatus.

In the present embodiment, the content of the phosphorus compound (B) is 0.005 to 2 parts by weight, preferably 0.01 to 1 part by weight, more preferably 0.02 to 0.5 part by weight and most preferably 0.02 to 0.1 part by weight, based on 100 parts by weight of the polyester resin (A). When the content is 0.005 part by weight or more, the thermal stability of the obtained polyester resin composition is improved, and when the content is 2 parts by weight or less, the transparency of the polyester resin becomes satisfactory.

### <Basic Compound (C)>

In the present embodiment, examples of the basic compound (C) may include, without being particularly limited to: carbonates, hydroxides, carboxylates, oxides, chlorides and alkoxides of the alkali metals such as lithium, sodium and potassium; carbonates, hydroxides, carboxylates, oxides and alkoxides of the alkali earth metals such as beryllium, magnesium and calcium; and amine compounds such as trimethylamine and triethylamine.

Among these, the carbonates, hydroxides and carboxylates of the alkali metals, and carbonates, hydroxides and carboxylates of the alkali earth metals are preferable, and the carboxylates of alkali metals and alkali earth metals are particularly preferable. The use of the carboxylates of the alkali metals and alkali earth metals particularly allows the thermal stability to be improved and in addition, results in a particularly excellent transparency. Examples of the carboxylates of the alkali metals and alkali earth metals include, without being particularly limited to: formate, acetate, propionate, butyrate, isobutyrate, caproate, caprylate, laurate, myristate, palmitate, stearate, sorbate and benzoate; among these, acetate, propionate, isobutyrate, hexanoate, laurate, myristate, stearate, sorbate and benzoate are preferable. As the alkali metals and alkali earth metals, sodium, potassium, magnesium and calcium are preferable, and potassium is particularly preferable. Among these, potassium acetate and potassium stearate are particularly preferable. These can be used each alone, or two or more thereof can be simultaneously used.

In the present embodiment, from the viewpoint of the mechanical properties and transparency, the content of the basic compound (C) is 0 to 2 parts by weight, preferably 0.0005 to 2 parts by weight, more preferably 0.001 to 1 part by weight and most preferably 0.005 to 0.5 part by weight, based on 100 parts by weight of the polyester resin (A).

### <Other Optional Components>

The polyester resin composition of the present embodiment may include other resins and various additives other than the phosphorus compound (B) and the basic compound (C) within ranges not impairing the object. These resins and additives may be added each alone or added in combinations of two or more thereof.

Examples of the other resins include, not being particularly limited to: polyester resins such as polyethylene terephthalate, polybutylene terephthalate, polyethylene naphthalate, isophthalic acid-modified polyethylene terephthalate, 1,4-cyclohexane dimethanol-modified polyethylene terephthalate and polyarylate; polycarbonate resin; styrene-based resins such as acrylonitrile-styrene copolymer, acrylonitrile-butadienestyrene copolymer and polystyrene; polyolefin resins such as polyethylene and polypropylene; vinyl chloride resin; polyamide resin; polyimide resin; polyether imide resin; polyurethane resin; polyphenylene ether resin; acrylic resin; phenolic resin; and epoxy resin.

Examples of the various additives include, not being particularly limited to: an antistatic agent, a flame retardant, a lubricant, an antioxidant, a light stabilizer, an ultraviolet absorber, a mold release agent, a dye and a pigment, and an inorganic filler.

### [Method for Producing Polyester Resin Composition]

The method for producing the polyester resin composition of the present embodiment comprises, mixing the polyester resin (A) comprising a dicarboxylic acid unit and a diol unit, 1 to 60 mol% of the diol unit being a diol unit having a cyclic acetal skeleton, with the phosphorus compound (B) represented by the following general formula (1) and the basic compound (C), wherein, based on 100 parts by weight of the polyester resin (A), the amount of the phosphorus compound (B) is 0.005 to 2 parts by weight and the amount of the base compound (C) is 0 to 2 parts by weight: 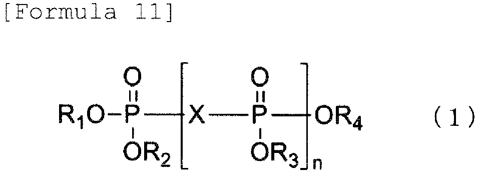 (wherein R₁, R₂, R₃ and R₄ each independently represent an aryl group, X represents a divalent group derived from an aromatic dihydroxy compound having 6 to 15 carbon atoms, and n is an integer of 1 to 5.)

The production method of the present embodiment is characterized in that after the completion of the polymerization reaction of the polyester resin (A), the phosphorus compound (B) and the basic compound (C) are mixed. In general, a phosphorus compound is known to deactivate the polycondensation reaction catalyst of the polyester resin (see Non Patent Literature 1); however, according to the production method of the present embodiment, after the completion of the polymerization reaction of the polyester resin, the phosphorus compound is mixed, and hence the phosphorus compound does not inhibit the progress of the polymerization reaction, and thus, the addition amount of the phosphorus compound can be optionally regulated.

The polyester resin (A), the phosphorus compound (B) and the basic compound (C) are respectively as described above.

In the present embodiment, the method for mixing the phosphorus compound (B) and the basic compound (C) with the polyester resin (A) is not particularly limited; however, as such a method, there are adopted a method in which the polyester resin (A) is pelletized and then dry blended, a method in which the dry blended mixture is melt kneaded, for example, with an extruder, and a method in which the phosphorus compound (B) and the basic compound (C) are added to the polyester resin (A) melted, for example, with an extruder.

In the present embodiment, the method for mixing the phosphorus compound (B) and the basic compound (C) with the polyester resin (A) is not particularly limited, and heretofore known apparatuses can be used as the mixing apparatus; examples of such an apparatus may include: mixing and kneading apparatuses such as a tumbler, a high speed mixer, a Nauta mixer, a ribbon blender, a mixing roll, a kneader, an intensive mixer, a single screw extruder and a twin screw extruder. In addition, liquid mixing apparatuses such as a gate mixer, a butterfly mixer, a universal mixer, a dissolver and a static mixer can also be used.

As a method for molding by using the polyester resin composition obtained by the production method of the present embodiment, heretofore known molding methods can be used, without being particularly limited; examples of such a method for molding may include injection molding, extrusion molding, calender molding, extrusion foam molding, extrusion blow molding and injection blow molding.

The polyester resin composition of the present embodiment is excellent in thermal stability, and accordingly can be suitably used in various applications to produce, for example, injection molded articles, extrusion molded articles, sheets, sheet molded articles, unstretched films, stretched films, injection blow bottles, direct blow bottles and foams.

### Examples

Hereinafter, the embodiment of the present invention is more specifically described with reference to Examples, but the scope of the present invention is not limited by these Examples.

### [Raw Materials]

The raw materials used in Examples and Comparative Examples are shown below.

### (1-1) Phosphorus compound (1)

1,3-Phenylenebis(dixylenyl phosphate) "PX-200" (trade name, manufactured by Daihachi Chemical Industry Co., Ltd.)

### Chemical structural formula:

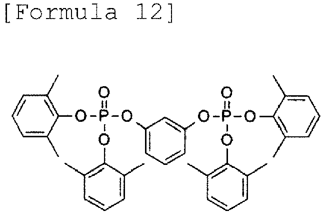

Molecular weight: 686, melting point: 95°C, phosphorus content: 9.0%

### (1-2) Phosphorus compound (2)

Bisphenol A bis(diphenyl phosphate) "FP-600" (trade name, manufactured by Adeka Corp.)

### Chemical structural formula:

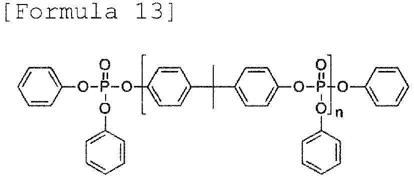

Molecular weight: 692(main component), phosphorus content: 8.9%

### (1-3) Phosphorus compound (3)

Triethyl phosphate (manufactured by Junsei Chemical Co., Ltd.)

### Chemical structural formula:

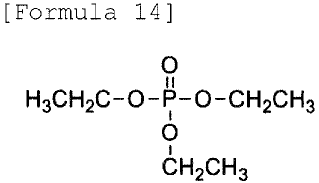

Molecular weight: 182, phosphorus content: 17.0 %

### (1-4) Phosphorus compound (4)

Mixture of monostearyl acid phosphate and distearyl acid phosphate, "AX-71" (trade name, manufactured by Adeka Corp.)

### Chemical structural formula:

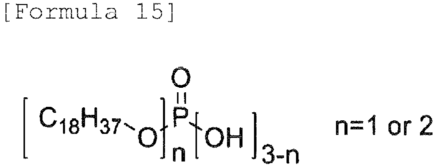

Molecular weight: about 490, melting point: 68 to 75°C, phosphorus content: about 6.3%

### (1-5) Phosphorus compound (5)

6-[3-(3-t-Butyl-4-hydroxy-5-methyl)propoxy]2,4,8,10-tetra-t-butyldibenz[d,f][1,3,2]-dioxaphosphepin "GP" (trade name, manufactured by Sumitomo Chemical Co., Ltd.)

### Chemical structural formula:

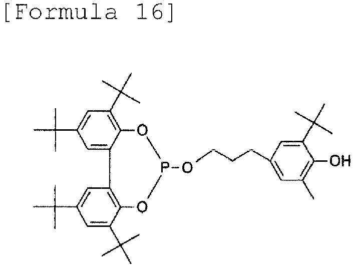

Molecular weight: 661, melting point: 115°C, phosphorus content: 4.7%

### (1-6) Phosphorus compound (6)

Tris(2,4-di-t-butylphenyl)phosphite "IRGAFOS 168" (trade name, manufactured by Ciba·Japan K.K.)

### Chemical structural formula:

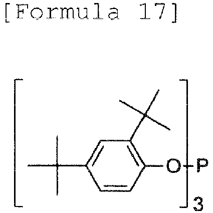

Molecular weight: 647, melting point: 183 to 186°C, phosphorus content: 4.8%

### (2-1) Basic compound (1)

Potassium acetate (manufactured by Junsei Chemical Co., Ltd.)

### (2-2) Basic compound (2)

Potassium stearate (manufactured by Junsei Chemical Co., Ltd.)

### [Measurement Methods]

The chemical and physical properties of the below-described polyester resins (A-1) and (A-2) were measured by the following method.

### (1) Proportion of the diol unit having a cyclic acetal skeleton

The proportion of the diol unit having a cyclic acetal skeleton in the polyester resin was derived from the peak area ratio by the ¹H-NMR measurement using a sample prepared by dissolving 20 mg of the polyester resin in 1 g of deuterochloroform. As the measurement apparatus, the JNM-AL400 (trade name) manufactured by JEOL Ltd. was used, and the measurement was performed at 400 MHz.

### (2) Glass transition temperature

The glass transition temperature of the polyester resin was measured with the DSC/TA-50WS manufactured by Shimadzu Corp., by using about 10 mg of a sample placed in an aluminum unsealed container, in a flow of nitrogen gas (30 ml/min), at a temperature increase rate of 20°C/min; the temperature at which the DSC curve changed by one half the difference between the base lines of the DSC curve before and after the transition was taken as the glass transition temperature.

### (3) Molecular weight (number average molecular weight Mn, weight average molecular weight Mw, molecular weight distribution Mw/Mn)

In 20 g of chloroform, 2 mg of the polyester resin was dissolved to prepare a sample; the sample was subjected to a measurement based on gel permeation chromatography (GPC); the measurement results were calibrated relative to polystyrene standards to derive Mn and Mw values. In the GPC apparatus used, to the TOSOH 8020 manufactured by Tosoh Corp., two columns GMHHR-L and one TSK G5000HR column manufactured by Tosoh Corp. were connected, and the measurement was performed at a column temperature set at 10°C. As the eluent, chloroform was used at a flow rate of 1.0 ml/min, and the measurement was performed with a UV detector.

### (4) Melt viscosity

As the measurement apparatus, the Capirograph 1C manufactured by Toyo Seiki Seisaku-sho, Ltd. was used, and the measurement was performed under the following conditions.

Temperature: 240°C, preheating time: 1 min, nozzle diameter: 1 mm, nozzle length: 10 mm, shear rate: 100 (1/sec).

### [Evaluation Methods]

The polyester resin compositions were evaluated on the basis of the following methods.

### (1) Gelation rate

The polyester resin composition pellet was sealed in a SUS container, heated at 290°C for 15 hours, 18 hours and 20 hours to prepare heated samples, and then the heated samples were dissolved in chloroform, and the insoluble substances were suction filtered. The filters were vacuum dried to a constant weight, and the ratios of the constant weights of the dried insoluble substances to the initial pellet amount were derived as the gelation rates. The cases where the gelation rates were less than 1%, 1% or more and less than 10%, and more than 10%, were marked with ○, Δ and ×, respectively.

### (2) Mn decrease rate

The polyester resin composition pellet was sealed in a SUS container, heated at 290°C for 15 hours, 18 hours and 20 hours to prepare heated samples. In 20 g of chloroform, 2 mg of each of the resin before heating and the foregoing heated resin samples was dissolved; the resulting chloroform solutions were subjected to a measurement based on gel permeation chromatography (GPC), and the measurement results were calibrated relative to polystyrene standards to derive Mn values. In the GPC apparatus used, to the TOSOH 8020 (trade name) manufactured by Tosoh Corp., two columns GMHHR-L and one TSK G5000HR column manufactured by Tosoh Corp. were connected, and the measurement was performed at a column temperature set at 40°C. As the eluent, chloroform was used at a flow rate of 1.0 ml/min, and the measurement was performed with a UV detector. The decrease rate of the Mn after the heating to the Mn before the heating was derived. The cases where the Mn decrease rates were less than 80%, 80% or more and less than 85%, and 85% or more were marked with ○, Δ and ×, respectively.

### (3) Degree of thermal decomposition

A pellet sample of 10 mg was increased in temperature from 40°C to 500°C, by using the DTG-50 (trade name) manufactured by Shimadzu Corp., at a nitrogen flow rate of 50 ml/min, at a temperature increase rate of 10°C/min, and the temperature at which the weight decrease rate reached 10% of the initial weight was determined. The cases where the foregoing temperature values were 405°C or higher, lower than 405°C and 395°C or higher, and lower than 395°C were marked with ○, Δ and ×, respectively.

### [Production of Polyester Resins (A-1) and (A-2)]

In each of the production of the polyester resin (A-1) and the production of the polyester resin (A-2), in a 150-liter polyester resin production apparatus equipped with a packed-tower rectification column, a partial condenser, a total condenser, a cold trap, a stirrer, an overheating device and a nitrogen introduction tube, terephthalic acid (PTA) and ethylene glycol (EG) were each placed in the amount presented in Table 1, and the esterification reaction was performed according to a conventional method. To the obtained ester, ethylene glycol for depolymerization (EG for depolymerization) and germanium dioxide (GeO₂) were added in the amounts presented in Table 1, respectively, and the depolymerization was performed at 225°C, in a flow of nitrogen. The reaction was performed for 3 hours while the produced water was being distilled off, and then the ethylene glycol was distilled off at 215°C and 13.3 kPa. To the obtained ester, tetra-n-butyl titanate (TBT), potassium acetate (AcOK), triethyl phosphate (TEP) and 3,9-bis(1,1-dimethyl-2-hydroxyethyl)-2,4,8,10-tetraoxaspiro[5.5]undecane (SPG) were added respectively in the amounts presented in Table 1, and the reaction was performed at 225°C and 13.3kPa for 3 hours. The obtained ester was increased in temperature and reduced in pressure, and finally, a polycondensation reaction was performed at 270°C, under a high vacuum (300 Pa or less), and the reaction was terminated when the melt viscosity of the obtained polyester resin reached the predetermined value; thus, each of the polyester resins (A-1) and (A-2) was obtained.

**[Table 1]**

| | Polyester resin (A-1) | Polyester resin (A-2) |
|---|---|---|
| Components mixed at the time of polymerization | | |
| Dicarboxylic acid component (g) | | |
| PTA | 37634 | 33093 |
| Diol component (g) | | |
| SPG | 21375 | 27891 |
| EG | 15888 | 13971 |
| EG for depolymerization | 15045 | 13229 |
| Germanium compound (g) | | |
| GeO₂ | 5.9 | 5.2 |
| Titanium compound (g) | | |
| TBT | 3.9 | 3.4 |
| Basic compound (g) | | |
| AcOK | 4.4 | 3.9 |
| Phosphorus compound (g) | | |
| TEP | 20.6 | 18.1 |
| Evaluation results of polyester resin | | |
| Proportion of diol unit having cyclic acetal skeleton (mol%) | 30 | 45 |
| Glass transition point (°C) | 101 | 110 |
| Number average molecular weight Mn (in unit of 10000) | 1.51 | 1.5 |
| Molecular weight distribution Mw/Mn | 3.9 | 3.6 |
| Melt viscosity (Pa·s) | 1600 | 2100 |

### [Examples 1 to 7 and Comparative Examples 1 to 5]

In each of Examples 1 to 7 and Comparative Examples 1 to 5, the polyester resin (A), the phosphorus compound (B) and the basic compound (C) were dry mixed with a tumbler in the proportions shown in one of Tables 2 to 5, and the resulting mixture was melt kneaded with a twin screw extruder (TEM37BS, manufactured by Toshiba Machine Co., Ltd.), to yield a pellet-type polyester resin composition. The melt kneading conditions were such that the cylinder temperature was set at 210 to 240°C, the die temperature was set at 240°C, and the screw rotation number was set at 100 rpm.

The obtained polyester resin compositions were evaluated on the basis of the foregoing methods. The evaluation results thus obtained are shown in Tables 2 to 5.

**[Table 2]**

| | | Example 1 | Example 2 | Example 3 |
|---|---|---|---|---|
| Polyester resin composition (A) | | | | |
| Polyester (A-1), parts by weight | | 100 | - | 100 |
| Polyester (A-2), parts by weight | | - | 100 | - |
| Phosphorus compound (B) | | | | |
| Phosphorus compound (1), parts by weight | | 0.2 | 0.2 | 0.2 |
| Phosphorus compound (2), parts by weight | | - | - | - |
| Basic compound(C) | | | | |
| Basic compound (1), parts by weight | | 0.15 | 0.01 | - |
| Basic compound (2), parts by weight | | - | - | 0.5 |

| Evaluation results | Heating time (h) | | | |
|---|---|---|---|---|
| Gelation rate (%) | 15 | ○ | ○ | ○ |
| | 18 | ○ | ○ | ○ |
| | 20 | ○ | ○ | ○ |
| Mn decrease rate (%) | 15 | ○ | ○ | ○ |
| | 18 | ○ | ○ | ○ |
| | 20 | ○ | ○ | ○ |
| Degree of thermal decomposition | | ○ | ○ | ○ |

**[Table 3]**

| | | Example 4 | Example 5 | Example 6 |
|---|---|---|---|---|
| Polyester resin composition (A) | | | | |
| Polyester (A-1), parts by weight | | 100 | - | 100 |
| Polyester (A-2), parts by weight | | - | 100 | - |
| Phosphorus compound (B) | | | | |
| Phosphorus compound (1), parts by weight | | 0.05 | - | - |
| Phosphorus compound (2), parts by weight | | - | 0.2 | 0.2 |
| Basic compound(C) | | | | |
| Basic compound (1), parts by weight | | 0.15 | 0.01 | - |
| Basic compound (2), parts by weight | | - | - | 0.02 |

| Evaluation results | Heating time (h) | | | |
|---|---|---|---|---|
| Gelation rate (%) | 15 | ○ | ○ | ○ |
| | 18 | ○ | Δ | Δ |
| | 20 | ○ | × | × |
| Mn decrease rate (%) | 15 | ○ | ○ | ○ |
| | 18 | ○ | Δ | Δ |
| | 20 | ○ | × | × |
| Degree of thermal decomposition | | ○ | ○ | ○ |

**[Table 4]**

| | | Example 7 | Comparative Example 1 | Comparative Example 2 |
|---|---|---|---|---|
| Polyester resin composition (A) | | | | |
| Polyester (A-1), parts by weight | | - | 100 | - |
| Polyester (A-2), parts by weight | | 100 | - | 100 |
| Phosphorus compound (B) | | | | |
| Phosphorus compound (1), parts by weight | | 0.2 | - | - |
| Phosphorus compound (2), parts by weight | | - | - | - |
| Phosphorus compound (3), parts by weight | | - | - | - |
| Phosphorus compound (4), parts by weight | | - | - | 0.3 |
| Phosphorus compound (5), parts by weight | | - | - | - |
| Phosphorus compound (6), parts by weight | | - | - | - |
| Basic compound(C) | | | | |
| Basic compound (1), parts by weight | | - | - | - |
| Basic compound (2), parts by weight | | - | - | - |

| Evaluation results | Heating time (h) | | | |
|---|---|---|---|---|
| Gelation rate (%) | 15 | ○ | Δ | × |
| | 18 | × | × | × |
| | 20 | × | × | × |
| Mn decrease rate (%) | 15 | ○ | Δ | × |
| | 18 | × | × | × |
| | 20 | × | × | × |
| Degree of thermal decomposition | | Δ | × | × |

**[Table 5]**

| | | Comparative Example 4 | Comparative Example 5 | Comparative Example 6 |
|---|---|---|---|---|
| Polyester resin composition (A) | | | | |
| Polyester (A-1), parts by weight | | 100 | - | - |
| Polyester (A-2), parts by weight | | - | 100 | 100 |
| Phosphorus compound (B) | | | | |
| Phosphorus compound (1), parts by weight | | - | - | - |
| Phosphorus compound (2), parts by weight | | - | - | - |
| Phosphorus compound (3), parts by weight | | 0.07 | - | - |
| Phosphorus compound (4), parts by weight | | - | - | - |
| Phosphorus compound (5), parts by weight | | - | 0.4 | - |
| Phosphorus compound (6), parts by weight | | - | - | 0.4 |
| Basic compound(C) | | | | |
| Basic compound (1), parts by weight | | 0.15 | 0.15 | 0.15 |
| Basic compound (2), parts by weight | | - | - | - |

| Evaluation results | Heating time (h) | | | |
|---|---|---|---|---|
| Gelation rate (%) | 15 | Δ | ○ | ○ |
| | 18 | × | × | × |
| | 20 | × | × | × |
| Mn decrease rate (%) | 15 | ○ | Δ | Δ |
| | 18 | × | × | × |
| | 20 | × | × | × |
| Degree of thermal decomposition | | Δ | Δ | Δ |

It is to be noted that the present application claims the priority based on Japanese Patent Application No. 2011-187016 filed August 30, 2011 with the Japan Patent Office, the contents of which are incorporated herein by reference.

### Industrial Applicability

The polyester resin (A) is amorphous and has a high glass transition temperature, and is excellent in moldability, heat resistance, thermal stability and in addition, transparency, and hence the polyester resin composition of the present invention can be widely used, for example, in the forms of vessels such as bottles, injection molded articles, foams, and packaging materials such as films and sheets, in various fields such as fields of electric/electronic devices and apparatuses such as OA equipment, information/communication equipment, and household electric appliances, and fields of vehicles, food and architecture.

The polyester resin composition of the present invention hardly undergoes, for example, the generation of a gel-like substance, degradation of molecular weight, and yellow coloration at the time of heat processing at a high temperature for a long time, and hence enables the long-time continuous production of an intended molded article without impairing the production rate at the time of molding.

## Claims

1. A polyester resin composition comprising:
a polyester resin (A) comprising a dicarboxylic acid unit and a diol unit, 1 to 60 mol% of the diol unit being a diol unit having a cyclic acetal skeleton;
a phosphorus compound (B) represented by the following general formula (1); and
a basic compound (C),
wherein, based on 100 parts by weight of the polyester resin (A), the phosphorus compound (B) is in an amount of 0.005 to 2 parts by weight and the basic compound (C) is in an amount of 0 to 2 parts by weight: 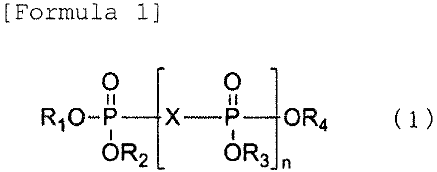 (wherein R₁, R₂, R₃ and R₄ each independently represent an aryl group, X represents a divalent group derived from an aromatic dihydroxy compound having 6 to 15 carbon atoms, and n is an integer of 1 to 5.)

2. The polyester resin composition according to claim 1, wherein a content of the basic compound (C) is 0.0005 to 2 parts by weight based on 100 parts by weight of the polyester resin (A).

3. The polyester resin composition according to claim 1 or 2, wherein the basic compound (C) is an alkali metal salt and/or an alkali earth metal salt.

4. The polyester resin composition according to any one of claims 1 to 3, wherein the diol unit having a cyclic acetal skeleton is the diol unit derived from a diol represented by the general formula (2): 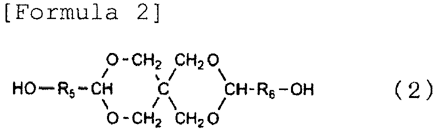 (wherein R₅ and R₆ each independently represent a hydrocarbon group selected from the group consisting of an aliphatic hydrocarbon group having 1 to 10 carbon atoms, an alicyclic hydrocarbon group having 3 to 10 carbon atoms and an aromatic hydrocarbon group having 6 to 10 carbon atoms) or the general formula (3): 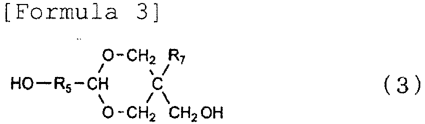 (wherein R₅ is the same as described above, and R₇ represents a hydrocarbon group selected from the group consisting of an aliphatic hydrocarbon group having 1 to 10 carbon atoms, an alicyclic hydrocarbon group having 3 to 10 carbon atoms and an aromatic hydrocarbon group having 6 to 10 carbon atoms.)

5. The polyester resin composition according to any one of claims 1 to 3, wherein the diol unit having a cyclic acetal skeleton is a diol unit derived from 3,9-bis(1,1-dimethyl-2-hydroxyethyl)-2,4,8,10-tetraoxaspiro[5.5]undecane or a diol unit derived from 5-methylol-5-ethyl-2-(1,1-dimethyl-2-hydroxyethyl)-1,3-dioxane.

6. The polyester resin composition according to any one of claims 1 to 5, wherein, of the diol units, the diol unit other than the diol unit having a cyclic acetal skeleton is the diol unit(s) derived from one or more diols selected from the group consisting of ethylene glycol, diethylene glycol, trimethylene glycol, 1,4-butane diol and 1,4-cyclohexane dimethanol.

7. The polyester resin composition according to any one of claims 1 to 6, wherein the dicarboxylic acid unit is the dicarboxylic acid unit(s) derived from one or more dicarboxylic acids selected from the group consisting of terephthalic acid, isophthalic acid, 1,4-naphthalene dicarboxylic acid, 1,5-naphthalene dicarboxylic acid, 2,6-naphthalene dicarboxylic acid and 2,7-naphthalene dicarboxylic acid.

8. The polyester resin composition according to any one of claims 1 to 7, wherein a melting point of the phosphorus compound (B) is 50°C or higher and 150°C or lower.

9. A method for producing a polyester resin composition, comprising:
mixing a polyester resin (A) comprising a dicarboxylic acid unit and a diol unit, 1 to 60 mol% of the diol unit being a diol unit having a cyclic acetal skeleton, with a phosphorus compound (B) represented by the following general formula (1) and a basic compound (C),
wherein, based on 100 parts by weight of the polyester resin (A), an amount of the phosphorus compound (B) is 0.005 to 2 parts by weight and an amount of the basic compound (C) is 0 to 2 parts by weight: 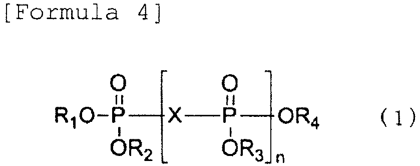 (wherein R₁, R₂, R₃ and R₄ each independently represent an aryl group, X represents a divalent group derived from an aromatic dihydroxy compound having 6 to 15 carbon atoms, and n is an integer of 1 to 5.)

10. The method for producing the polyester resin composition according to claim 9, wherein a mixing amount of the basic compound (C) is 0.0005 to 2 parts by weight based on 100 parts by weight of the polyester resin (A).

11. The method for producing the polyester resin composition according to claim 9 or 10, wherein the basic compound (C) is an alkali metal salt and/or an alkali earth metal salt.

12. The method for producing the polyester resin composition according to any one of claims 9 to 11, wherein the diol unit having a cyclic acetal skeleton is a diol unit derived from a diol represented by the general formula (2): 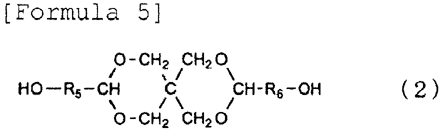 (wherein R₅ and R₆ each independently represent a hydrocarbon group selected from the group consisting of an aliphatic hydrocarbon group having 1 to 10 carbon atoms, an alicyclic hydrocarbon group having 3 to 10 carbon atoms and an aromatic hydrocarbon group having 6 to 10 carbon atoms) or the general formula (3): 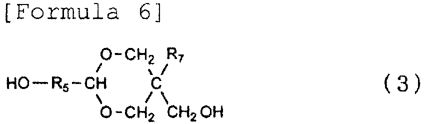 (wherein R₅ is the same as described above, and R₇ represents a hydrocarbon group selected from the group consisting of an aliphatic hydrocarbon group having 1 to 10 carbon atoms, an alicyclic hydrocarbon group having 3 to 10 carbon atoms and an aromatic hydrocarbon group having 6 to 10 carbon atoms.)

13. The method for producing the polyester resin composition according to any one of claims 9 to 11, wherein the diol unit having a cyclic acetal skeleton is a diol unit derived from 3,9-bis(1,1-dimethyl-2-hydroxyethyl)-2,4,8,10-tetraoxaspiro[5.5]undecane or a diol unit derived from 5-methylol-5-ethyl-2-(1,1-dimethyl-2-hydroxyethyl)-1,3-dioxane.

14. The method for producing the polyester resin composition according to any one of claims 9 to 13, wherein of the diol units, the diol unit other than the diol unit having a cyclic acetal skeleton is the diol unit(s) derived from one or more diols selected from the group consisting of ethylene glycol, diethylene glycol, trimethylene glycol, 1,4-butane diol and 1,4-cyclohexane dimethanol.

15. The method for producing the polyester resin composition according to any one of claims 9 to 14, wherein the dicarboxylic acid unit is the dicarboxylic acid unit(s) derived from one or more dicarboxylic acids selected from the group consisting of terephthalic acid, isophthalic acid, 1,4-naphthalene dicarboxylic acid, 1,5-naphthalene dicarboxylic acid, 2,6-naphthalene dicarboxylic acid and 2,7-naphthalene dicarboxylic acid.

16. The method for producing the polyester resin composition according to any one of claims 9 to 15, wherein a melting point of the phosphorus compound (B) is 50°C or higher and 150°C or lower.

## Patentansprüche

1. Eine Polyesterharzzusammensetzung, umfassend:
ein Polyesterharz (A), das eine Dicarbonsäureeinheit und eine Dioleinheit umfasst, wobei 1 bis 60 Mol-% der Dioleinheit eine Dioleinheit mit einem cyclischen Acetalgerüst sind; eine Phosphorverbindung (B), dargestellt durch die folgende allgemeine Formel (1); und eine basische Verbindung (C),
wobei, bezogen auf 100 Gewichtsteile des Polyesterharzes (A), die Phosphorverbindung (B) in einer Menge von 0,005 bis 2 Gewichtsteilen vorliegt und die basische Verbindung (C) in einer Menge von 0 bis 2 Gewichtsteilen vorliegt: 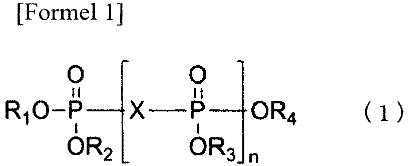 (wobei R₁, R₂, R₃ und R₄ jeweils unabhängig einen Arylrest bedeuten, X einen zweiwertigen Rest, der von einer aromatischen Dihydroxyverbindung mit 6 bis 15 Kohlenstoffatomen abgeleitet ist, bedeutet und n eine ganze Zahl von 1 bis 5 ist).

2. Die Polyesterharzzusammensetzung nach Anspruch 1, wobei ein Gehalt der basischen Verbindung (C) 0,0005 bis 2 Gewichtsteile, bezogen auf 100 Gewichtsteile des Polyesterharzes (A), beträgt.

3. Die Polyesterharzzusammensetzung nach Anspruch 1 oder 2, wobei die basische Verbindung (C) ein Alkalimetallsalz und/oder ein Erdalkalimetallsalz ist.

4. Die Polyesterharzzusammensetzung nach einem der Ansprüche 1 bis 3, wobei die Dioleinheit mit einem cyclischen Acetalgerüst die Dioleinheit ist, die von einem Diol, dargestellt durch die allgemeine Formel (2): 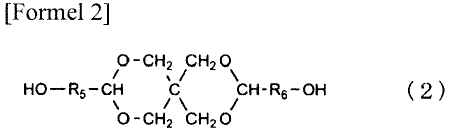 (wobei R₅ und R₆ jeweils unabhängig einen Kohlenwasserstoffrest, ausgewählt aus der Gruppe bestehend aus einem aliphatischen Kohlenwasserstoffrest mit 1 bis 10 Kohlenstoffatomen, einem alicyclischen Kohlenwasserstoffrest mit 3 bis 10 Kohlenstoffatomen und einem aromatischen Kohlenwasserstoffrest mit 6 bis 10 Kohlenstoffatomen, bedeuten) oder die allgemeine Formel (3): 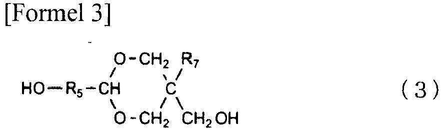 (wobei R₅ wie vorstehend beschrieben ist und R₇ einen Kohlenwasserstoffrest, ausgewählt aus der Gruppe bestehend aus einem aliphatischen Kohlenwasserstoffrest mit 1 bis 10 Kohlenstoffatomen, einem alicyclischen Kohlenwasserstoffrest mit 3 bis 10 Kohlenstoffatomen und einem aromatischen Kohlenwasserstoffrest mit 6 bis 10 Kohlenstoffatomen, bedeutet) abgeleitet ist.

5. Die Polyesterharzzusammensetzung nach einem der Ansprüche 1 bis 3, wobei die Dioleinheit mit einem cyclischen Acetalgerüst eine von 3,9-Bis(1,1-dimethyl-2-hydroxyethyl)-2,4,8,10-tetraoxaspiro[5.5]undecan abgeleitete Dioleinheit oder eine von 5-Methylol-5-ethyl-2-(1,1-dimethyl-2-hydroxyethyl)-1,3-dioxan abgeleitete Dioleinheit ist.

6. Die Polyesterharzzusammensetzung nach einem der Ansprüche 1 bis 5, wobei unter den Dioleinheiten die Dioleinheit, die von der Dioleinheit mit einem cyclischen Acetalgerüst verschieden ist, die Dioleinheit(en) ist/sind, die von einem oder mehreren Diolen, ausgewählt aus der Gruppe bestehend aus Ethylenglycol, Diethylenglycol, Trimethylenglycol, 1,4-Butandiol und 1,4-Cyclohexandimethanol, abgeleitet ist/sind.

7. Die Polyesterharzzusammensetzung nach einem der Ansprüche 1 bis 6, wobei die Dicarbonsäureeinheit die Dicarbonsäureeinheit(en) ist/sind, die von einer oder mehreren Dicarbonsäuren, ausgewählt aus der Gruppe bestehend aus Terephthalsäure, Isophthalsäure, 1,4-Naphthalindicarbonsäure, 1,5-Naphthalindicarbonsäure, 2,6-Naphthalindicarbonsäure und 2,7-Naphthalindicarbonsäure, abgeleitet ist/sind.

8. Die Polyesterharzzusammensetzung nach einem der Ansprüche 1 bis 7, wobei ein Schmelzpunkt der Phosphorverbindung (B) 50°C oder höher und 150°C oder niedriger ist.

9. Ein Verfahren zur Herstellung einer Polyesterharzzusammensetzung, umfassend:
Mischen eines Polyesterharzes (A), das eine Dicarbonsäureeinheit und eine Dioleinheit umfasst, wobei 1 bis 60 Mol-% der Dioleinheit eine Dioleinheit mit einem cyclischen Acetalgerüst sind, mit einer Phosphorverbindung (B), dargestellt durch die folgende allgemeine Formel (1), und einer basischen Verbindung (C),
wobei, bezogen auf 100 Gewichtsteile des Polyesterharzes (A), eine Menge der Phosphorverbindung (B) 0,005 bis 2 Gewichtsteile beträgt und eine Menge der basischen Verbindung (C) 0 bis 2 Gewichtsteile beträgt: 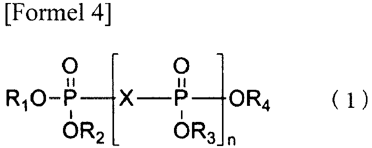 (wobei R₁, R₂, R₃ und R₄ jeweils unabhängig einen Arylrest bedeuten, X einen zweiwertigen Rest, der von einer aromatischen Dihydroxyverbindung mit 6 bis 15 Kohlenstoffatomen abgeleitet ist, bedeutet und n eine ganze Zahl von 1 bis 5 ist).

10. Das Verfahren zur Herstellung der Polyesterharzzusammensetzung nach Anspruch 9, wobei ein Mischmenge der basischen Verbindung (C) 0,0005 bis 2 Gewichtsteile, bezogen auf 100 Gewichtsteile des Polyesterharzes (A), beträgt.

11. Das Verfahren zur Herstellung der Polyesterharzzusammensetzung nach Anspruch 9 oder 10, wobei die basische Verbindung (C) ein Alkalimetallsalz und/oder ein Erdalkalimetallsalz ist.

12. Das Verfahren zur Herstellung der Polyesterharzzusammensetzung nach einem der Ansprüche 9 bis 11, wobei die Dioleinheit mit einem cyclischen Acetalgerüst eine Dioleinheit ist, die von einem Diol, dargestellt durch die allgemeine Formel (2): 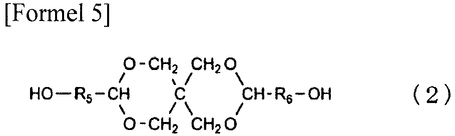 (wobei R₅ und R₆ jeweils unabhängig einen Kohlenwasserstoffrest, ausgewählt aus der Gruppe bestehend aus einem aliphatischen Kohlenwasserstoffrest mit 1 bis 10 Kohlenstoffatomen, einem alicyclischen Kohlenwasserstoffrest mit 3 bis 10 Kohlenstoffatomen und einem aromatischen Kohlenwasserstoffrest mit 6 bis 10 Kohlenstoffatomen, bedeuten) oder die allgemeine Formel (3): 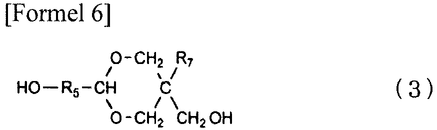 (wobei R₅ wie vorstehend beschrieben ist und R₇ einen Kohlenwasserstoffrest, ausgewählt aus der Gruppe bestehend aus einem aliphatischen Kohlenwasserstoffrest mit 1 bis 10 Kohlenstoffatomen, einem alicyclischen Kohlenwasserstoffrest mit 3 bis 10 Kohlenstoffatomen und einem aromatischen Kohlenwasserstoffrest mit 6 bis 10 Kohlenstoffatomen, bedeutet) abgeleitet ist.

13. Das Verfahren zur Herstellung der Polyesterharzzusammensetzung nach einem der Ansprüche 9 bis 11, wobei die Dioleinheit mit einem cyclischen Acetalgerüst eine von 3,9-Bis(1,1-dimethyl-2-hydroxyethyl)-2,4,8,10-tetraoxaspiro[5.5]undecan abgeleitete Dioleinheit oder eine von 5-Methylol-5-ethyl-2-(1,1-dimethyl-2-hydroxyethyl)-1,3-dioxan abgeleitete Dioleinheit ist.

14. Das Verfahren zur Herstellung der Polyesterharzzusammensetzung nach einem der Ansprüche 9 bis 13, wobei unter den Dioleinheiten die Dioleinheit, die von der Dioleinheit mit einem cyclischen Acetalgerüst verschieden ist, die Dioleinheit(en) ist/sind, die von einem oder mehreren Diolen, ausgewählt aus der Gruppe bestehend aus Ethylenglycol, Diethylenglycol, Trimethylenglycol, 1,4-Butandiol und 1,4-Cyclohexandimethanol, abgeleitet ist/sind.

15. Das Verfahren zur Herstellung der Polyesterharzzusammensetzung nach einem der Ansprüche 9 bis 14, wobei die Dicarbonsäureeinheit die Dicarbonsäureeinheit(en) ist/sind, die von einer oder mehreren Dicarbonsäuren, ausgewählt aus der Gruppe bestehend aus Terephthalsäure, Isophthalsäure, 1,4-Naphthalindicarbonsäure, 1,5-Naphthalindicarbonsäure, 2,6-Naphthalindicarbonsäure und 2,7-Naphthalindicarbonsäure, abgeleitet ist/sind.

16. Das Verfahren zur Herstellung der Polyesterharzzusammensetzung nach einem der Ansprüche 9 bis 15, wobei ein Schmelzpunkt der Phosphorverbindung (B) 50°C oder höher und 150°C oder niedriger ist.

## Revendications

1. Composition de résine de polyester comprenant:
une résine de polyester (A) comprenant un motif acide dicarboxylique et un motif diol, 1 à 60 % en moles du motif diol étant un motif diol ayant un squelette acétal cyclique; un composé du phosphore (B) représenté par la formule générale (1) qui suit; et
un composé basique (C),
dans laquelle, pour 100 parties en poids de la résine de polyester (A), le composé du phosphore (B) est présent en une quantité de 0,005 à 2 parties en poids et le composé basique (C) est présent en une quantité de 0 à 2 parties en poids: 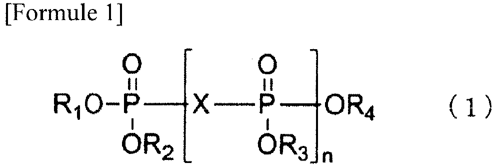 (dans laquelle chacun des groupes R₁, R₂, R₃ et R₄ représente indépendamment un groupe aryle, X représente un groupe divalent dérivé d'un composé dihydroxy aromatique ayant 6 à 15 atomes de carbone, et n est un entier de 1 à 5).

2. Composition de résine de polyester selon la revendication 1, dans laquelle la teneur en composé basique (C) est de 0,0005 à 2 parties en poids pour 100 parties en poids de la résine de polyester (A).

3. Composition de résine de polyester selon la revendication 1 ou 2, dans laquelle le composé basique (C) est un sel de métal alcalin et/ou un sel de métal alcalino-terreux.

4. Composition de résine de polyester selon l'une quelconque des revendications 1 à 3, dans laquelle le motif diol ayant un squelette acétal cyclique est le motif diol dérivé d'un diol représenté par la formule générale (2): 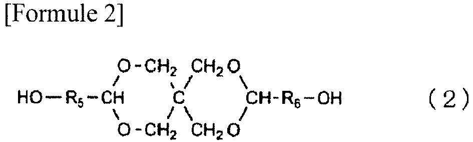 (dans laquelle chacun des groupes R₅ et R₆ représente indépendamment un groupe hydrocarboné choisi dans l'ensemble constitué par un groupe hydrocarboné aliphatique ayant 1 à 10 atomes de carbone, un groupe hydrocarboné alicyclique ayant 3 à 10 atomes de carbone et un groupe hydrocarboné aromatique ayant 6 à 10 atomes de carbone), ou par la formule générale (3): 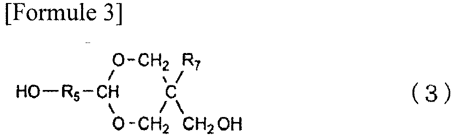 (dans laquelle R₅ est tel que décrit ci-dessus, et R₇ représente un groupe hydrocarboné choisi dans l'ensemble constitué par un groupe hydrocarboné aliphatique ayant 1 à 10 atomes de carbone, un groupe hydrocarboné alicyclique ayant 3 à 10 atomes de carbone et un groupe hydrocarboné aromatique ayant 6 à 10 atomes de carbone).

5. Composition de résine de polyester selon l'une quelconque des revendications 1 à 3, dans laquelle le motif diol ayant un squelette acétal cyclique est un motif diol dérivé du 3,9-bis(1,1-diméthyl-2-hydroxyéthyl)-2,4,8,10-tétraoxaspiro[5.5]undécane ou un motif diol dérivé du 5-méthylol-5-éthyl-2-(1,1-diméthyl-2-hydroxyéthyl)-1,3-dioxane.

6. Composition de résine de polyester selon l'une quelconque des revendications 1 à 5, dans laquelle, parmi les motifs diols, le motif diol autre que le motif diol ayant un squelette acétal cyclique est le (les) motif(s) diol(s) dérivé(s) d'un ou plusieurs diols choisis dans l'ensemble constitué par l'éthylèneglycol, le diéthylèneglycol, le triméthylèneglycol, le 1,4-butanediol et le 1,4-cyclohexanediméthanol.

7. Composition de résine de polyester selon l'une quelconque des revendications 1 à 6, dans laquelle le motif acide dicarboxylique est le (les) motif(s) acide(s) dicarboxylique(s) dérivé(s) d'un ou plusieurs acides dicarboxyliques choisis dans l'ensemble constitué par l'acide téréphtalique, l'acide isophtalique, l'acide 1,4-naphtalènedicarboxylique, l'acide 1,5-naphtalènedicarboxylique, l'acide 2,6-naphtalènedicarboxylique et l'acide 2,7-naphtalènedicarboxylique.

8. Composition de résine de polyester selon l'une quelconque des revendications 1 à 7, dans laquelle un point de fusion du composé du phosphore (B) est de 50 °C ou plus et de 150 °C ou moins.

9. Méthode de production d'une composition de résine de polyester, comprenant:
le mélange d'une résine de polyester (A) comprenant un motif acide dicarboxylique et un motif diol, 1 à 60 % en moles du motif diol étant un motif diol ayant un squelette acétal cyclique, avec un composé du phosphore (B) représenté par la formule générale (1) suivante et un composé basique (C),
dans laquelle, pour 100 parties en poids de la résine de polyester (A), la quantité du composé du phosphore (B) est de 0,005 à 2 parties en poids et la quantité du composé basique (C) est de 0 à 2 parties en poids: 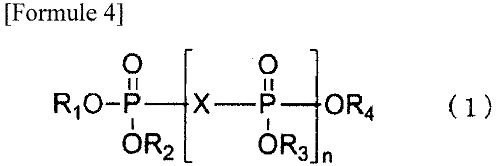 (dans laquelle chacun des groupes R₁, R₂, R₃ et R₄ représente indépendamment un groupe aryle, X représente un groupe divalent dérivé d'un composé dihydroxy aromatique ayant 6 à 15 atomes de carbone, et n est un entier de 1 à 5).

10. Méthode de production d'une composition de résine de polyester selon la revendication 9, dans laquelle la quantité de composé basique (C) mis en mélange est de 0,0005 à 2 parties en poids pour 100 parties en poids de la résine de polyester (A).

11. Méthode de production d'une composition de résine de polyester selon la revendication 9 ou 10, dans laquelle le composé basique (C) est un sel de métal alcalin et/ou un sel de métal alcalino-terreux.

12. Méthode de production d'une composition de résine de polyester selon l'une quelconque des revendications 9 à 11, dans laquelle le motif diol ayant un squelette acétal cyclique est le motif diol dérivé d'un diol représenté par la formule générale (2): 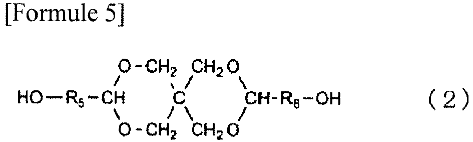 (dans laquelle chacun des groupes R₅ et R₆ représente indépendamment un groupe hydrocarboné choisi dans l'ensemble constitué par un groupe hydrocarboné aliphatique ayant 1 à 10 atomes de carbone, un groupe hydrocarboné alicyclique ayant 3 à 10 atomes de carbone et un groupe hydrocarboné aromatique ayant 6 à 10 atomes de carbone), ou par la formule générale (3): 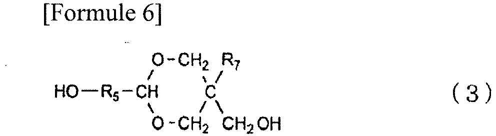 (dans laquelle R₅ est tel que décrit ci-dessus, et R₇ représente un groupe hydrocarboné choisi dans l'ensemble constitué par un groupe hydrocarboné aliphatique ayant 1 à 10 atomes de carbone, un groupe hydrocarboné alicyclique ayant 3 à 10 atomes de carbone et un groupe hydrocarboné aromatique ayant 6 à 10 atomes de carbone).

13. Méthode de production d'une composition de résine de polyester selon l'une quelconque des revendications 9 à 11, dans laquelle le motif diol ayant un squelette acétal cyclique est un motif diol dérivé de 3,9-bis(1,1-diméthyl-2-hydroxyéthyl)-2,4,8,10-tétraoxaspiro[5.5]undécane ou un motif diol dérivé de 5-méthylol-5-éthyl-2-(1,1-diméthyl-2-hydroxyéthyl)-1,3-dioxane.

14. Méthode de production d'une composition de résine de polyester selon l'une quelconque des revendications 9 à 13, dans laquelle, parmi les motifs diols, le motif diol autre que le motif diol ayant un squelette acétal cyclique est le (les) motif(s) diol(s) dérivé(s) d'un ou plusieurs diols choisis dans l'ensemble constitué par l'éthylèneglycol, le diéthylèneglycol, le triméthylèneglycol, le 1,4-butanediol et le 1,4-cyclohexanediméthanol.

15. Méthode de production d'une composition de résine de polyester selon l'une quelconque des revendications 9 à 14, dans laquelle le motif acide dicarboxylique est le (les) motif(s) acide(s) dicarboxylique(s) dérivé(s) d'un ou plusieurs acides dicarboxyliques choisis dans l'ensemble constitué par l'acide téréphtalique, l'acide isophtalique, l'acide 1,4-naphtalènedicarboxylique, l'acide 1,5-naphtalènedicarboxylique, l'acide 2,6-naphtalènedicarboxylique et l'acide 2,7-naphtalènedicarboxylique.

16. Méthode de production d'une composition de résine de polyester selon l'une quelconque des revendications 9 à 15, dans laquelle un point de fusion du composé du phosphore (B) est de 50 °C ou plus et de 150 °C ou moins.
